# EUROPEAN PATENT SPECIFICATION

(11) **EP 3 954 979 B1**
(45) Date of publication and mention of the grant of the patent: **14.10.2026**
(21) Application number: 19923758.7
(22) Date of filing: 24.10.2019
(51) Int. Cl.: G01L 13/00, G01L 13/06

(54) **DIFFERENTIAL PRESSURE SENSOR PACKAGE STRUCTURE AND ELECTRONIC DEVICE**
GEHÄUSESTRUKTUR FÜR DIFFERENZDRUCKSENSOR UND ELEKTRONISCHE VORRICHTUNG
STRUCTURE DE BOÎTIER DE CAPTEUR DE PRESSION DIFFÉRENTIELLE ET DISPOSITIF ÉLECTRONIQUE

(30) Priority: 09.04.2019 CN 201910280377
(43) Date of publication of application: 16.02.2022
(73) Proprietor: Memsensing Microsystems (Suzhou, China) Co. Ltd, Suzhou, Jiangsu 215127 (CN)
(72) Inventor: LI, Gang, Suzhou, Jiangsu 215127 (CN); MEI, Jiaxin, Suzhou, Jiangsu 215127 (CN); SHAO, Chenglong, Suzhou, Jiangsu 215127 (CN)
(74) Representative: Berggren Oy
(86) International application number: PCT/CN2019/112935
(87) International publication number: WO 2020/206981

(56) References cited:
- EP-A1- 3 330 689
- WO-A1-2014/053323
- CN-A- 107 991 016
- CN-A- 108 072 487
- CN-A- 109 827 703
- CN-A- 110 082 027
- CN-U- 204 612 856
- CN-U- 206 538 189
- JP-A- 2009 254 150
- US-A- 5 392 771
- US-A1- 2019 086 282
- US-B2- 10 065 853

## Description

### TECHNICAL FIELD

The present disclosure relates to the technical field of sensors, and in particular, relates to a package structure for a differential pressure sensor, and an electronic device.

### BACKGROUND

At present, in an electronic device where a gas pressure difference needs to be detected, according to the related art, two gas pressure sensors are typically configured on a PCB board, and whether the differential pressure reaches a threshold is determined by processing pressure differences of the two gas pressure sensors, such that the gas pressure difference is detected.

However, configuration of two gas pressure sensors increases the cost of the electronic device. In addition, the two gas pressure sensors occupy a large space, and thus small-size design of the product is hard to achieve. Further, the two gas pressure sensors strongly depend on each other, and the product may fail in pressure difference detection once any of the two sensors is damaged. As a result, it is highly risky that the electronic device fails. EP3330689 discloses a transducer modulus, an electronic apparatus including the transducer modulus, and a method for manufacturing the transducer modulus. It also discloses that the transducer modulus houses a plurality of devices designed to carry out differential and absolute measurements of environmental quantities to be detected. US20190086282 discloses a pressure sensor apparatus including a lead frame, a pressure sensing element mounted on the lead frame to measure a relative pressure between a first part and a second part, and a housing including a reference medium inlet hole to apply a pressure of a reference medium to the first part, and including a target medium inlet hole to apply a pressure of a target medium to the second part, wherein the reference medium inlet hole is provided in a first surface of the housing, wherein the target medium inlet hole is provided in a second surface of the housing other than the first surface, and wherein the lead frame includes one or more insertion terminals configured to be inserted into and electrically connected to terminal holes of a wire connector. WO2014053323 discloses a pressure sensor for detecting a measurement pressure related to a reference air pressure. The sensor has at least one transducer element, a main body, a counter body, a measuring membrane and a filter element. A reference pressure chamber is formed between the measuring membrane, the main body and the counter body, wherein the side of the measuring membrane is exposed to the measurement pressure and the side of the measuring membrane facing the counter body is exposed to the reference air pressure via the reference pressure chamber. The reference air pressure is supplied via a reference pressure duct through an opening in the reference pressure chamber, wherein the reference pressure duct runs through the filter element. A pressure-dependent deflection of the measuring membrane consequent on the difference between the two pressures is measured by means of the at least one transducer element and the filter element comprising porous silicon.

Therefore, it is urgent to provide a differential pressure sensor featuring high detection accuracy and high reliability to achieve detection of the gas pressure difference.

### SUMMARY

A technical problem to be solved by the present disclosure is to provide a package structure for a differential pressure sensor, and an electronic device to improve detection accuracy of the differential pressure sensor and reliability of the electronic device. The scope of protection sought for various embodiments of the invention is set out by the independent claim. The embodiments, examples and features, if any, described in this specification that do not fall under the scope of the independent claims are to be interpreted as examples useful for understanding various embodiments of the invention.

To solve the above technical problem, the present disclosure provides package structure for a differential pressure as defined in claim 1.

Optionally, the first through hole runs through the housing, and the second through hole runs through the substrate.
Optionally, the first through hole and the second through hole both run through the substrate.

Optionally, the first through hole and the second through hole are disposed on two opposite sides or the same side of the package structure for the differential pressure sensor.

Optionally, the package structure further includes: an application specific integrated circuit (ASIC) chip fixed to the front side of the substrate disposed in the first chamber; wherein the ASIC chip is connected to a detection signal output terminal of the pressure sensing element and configured to calculate a differential pressure value based on a detection signal output by the pressure sensing element.

Optionally, a surface of the ASIC chip is covered with a protective layer.

Optionally, the ASIC chip is configured to output a feedback signal in response to the calculated differential pressure value reaching a threshold.

According to the claimed invention, a rear side of the substrate is provided with a sealed region, wherein the sealed region is a closed pattern, and a projection of the second through hole in a plane of the sealed region falls within the closed pattern.

Optionally, the sealed region protrudes from the rear side of the substrate or is flush with the rear side of the substrate.

According to the claimed invention, the sealed region includes a conductive ring.

To solve the above technical problem, the present disclosure further provides an electronic device having a package structure for a differential pressure sensor. The electronic device includes: the package structure for the differential pressure sensor as described above; and a first circuit board, wherein the first circuit board is provided with a third through hole, the third through hole being communicated with the second through hole in a sealing fashion.

Optionally, the sealed region is disposed between the substrate and the first circuit board and fixed to the first circuit board by soldering or adhesive bonding, such that the third through hole is communicated with the second through hole in a sealing fashion.

Optionally, the electronic device further includes: a water-repellent ventilative film configured to cover the first through hole and/or the third through hole.

Optionally, the electronic device further includes: a second circuit board, wherein the substrate and the first circuit board are perpendicularly fixed to the second circuit board, and the first circuit board and the second circuit board are electrically connected.

Optionally, in the case that the package structure for the differential pressure sensor is provided with an application specific integrated circuit (ASIC) chip, the ASIC chip is connected to the first circuit board by an electrical connection structure in the substrate.

Optionally, the electronic device further includes: a processor, connected to a signal output terminal of the ASIC chip, and configured to acquire a feedback signal output by the ASIC chip.

Optionally, the ASIC chip is configured to send the feedback signal to the processor in response to a differential pressure value detected by the pressure sensing element reaching a threshold.

Optionally, the processor is configured to be in a standby state in response to the differential pressure value not reaching the threshold.

The package structure according to the present disclosure, only one pressure sensing element is provided. A pressure sensing layer of the pressure sensing element is disposed between a first chamber and a second chamber. The first chamber and the second chamber are each provided with a through hole. Therefore, a differential pressure value between the first chamber and the second chamber may be detected by the single pressure sensing element.

Since only one pressure sensing element is provided, the package structure is simple, the size is small, and the cost is low.

Further, the package structure for the differential pressure sensor further includes an ASIC chip configured to calculate a differential pressure value based on a detection signal output by the pressure sensing element.

Since the ASIC chip has low power consumption, power consumption is greatly reduced as compared with the case of calculating the differential pressure value by the processor of the device.

In the electronic device according to the present disclosure, the first circuit board is fixed to the substrate of the differential pressure sensor, and the through hole in the first circuit board is communicated with the through hole in the substrate in a sealing fashion, such that entered gas is prevented from leaking between the first circuit board and the substrate, and thus accuracy of detection is improved.

Further, the electronic device further includes a processor connected to the ASIC chip of the differential pressure sensor. The ASIC chip sends feedback information to the processor in response to the differential pressure value reaching a threshold.

Therefore, the processor is not enabled in real time, such that power consumption of the electronic device is reduced, and standby time is prolonged.

### BRIEF DESCRIPTION OF THE DRAWINGS

FIG. 1 is a schematic structural diagram of an electronic device according to a first embodiment of the present disclosure;
FIG. 2 is a schematic structural diagram of a pressure sensing element of the electronic device according to the first embodiment of the present disclosure;
FIG. 3 is a schematic diagram of a rear side of a substrate of a package structure for a differential pressure sensor according to the first embodiment of the present disclosure;
FIG. 4 is a schematic structural diagram of an electronic device according to a second embodiment of the present disclosure;
FIG. 5 is a schematic structural diagram of an electronic device according to a third embodiment of the present disclosure;
FIG. 6 is a schematic structural diagram of an electronic device according to a fourth embodiment of the present disclosure;
FIG. 7 is a schematic structural diagram of an electronic device according to a fifth embodiment of the present disclosure; and
FIG. 8 is a schematic structural diagram of an electronic device according to a sixth embodiment of the present disclosure.

### DETAILED DESCRIPTION

Hereinafter, embodiments illustrating a package structure for differential pressure sensor and an electronic device according to the present disclosure are described in detail.

### First Embodiment

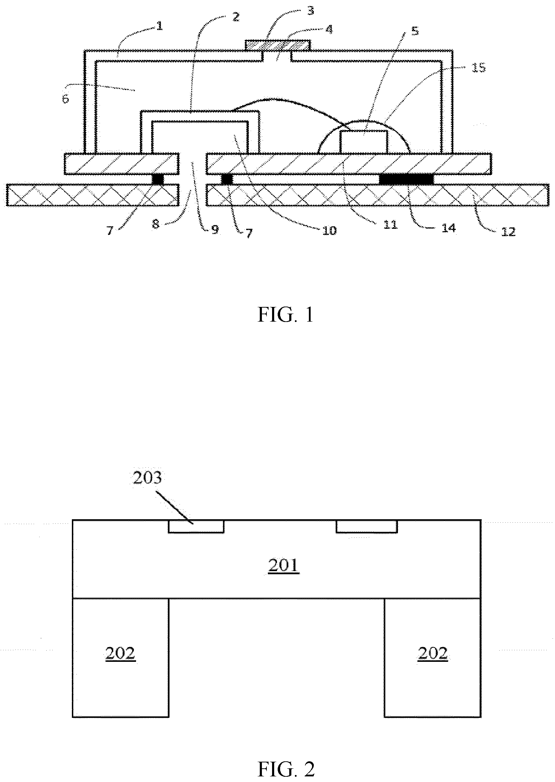

Referring to FIG. 1, a schematic sectional view of an electronic device according to a specific embodiment of the present disclosure is illustrated.

The electronic device includes a package structure for a differential pressure sensor. The package structure includes: a substrate 11 and a housing 1. An edge of the housing 1 is fixed to a front side of the substrate 11, and defines a first chamber 6 with the substrate 11.

The substrate 11 may be made of commonly used materials, for example RF-4, BT, ceramics, or the like.

A soldering point or an electrical connection structure may be formed on the substrate 11, and serves as an electrical connection point.

The substrate 11 may be a single-layer or multi-layer circuit board. A surface of the substrate 11 may be provided with a circuit structure, or an electrical contact portion, for example, a solder pad or the like. The substrate 11 may be further internally provided with an electrical connection structure, configured to be connected to the electrical contact portions on the front side and the rear side of the substrate 11.

The housing 1, serving as a package housing of the differential pressure sensor, is configured to protect electronic elements inside the housing, and meanwhile, defines the first chamber 6 with the substrate 11.

The housing 1 may be made of a metal, the housing 1 is high-temperature resistant, and the manufacture process of the housing 1 is simple. Therefore, the housing may be applicable to mass production. In addition, the housing made of the metal also has characteristics of anti-corrosion, electromagnetic shielding, and good-mechanical properties, such that a product is well protected by the housing.

In other embodiments, the housing 1 may also be made of other hard materials, for example, plastics or the like, which is not limited herein.

The edge of the housing 1 is fixed to the front side of the substrate 11 by welding, adhesive bonding or the like, such that the first chamber 6 is defined between the housing 1 and the substrate 11.

In this specific embodiment, the housing 1 is provided with a first through hole 4 running through the body of the housing 1, such that the first chamber 6 is communicated with the outside of the housing 1.

The body of the housing 1 is provided with at least one first through hole 4.

In this embodiment, the housing 1 is provided with only one first through hole 4. However, in other embodiments, the housing 1 may also be provided with more than two first through holes.

The edge of the housing 1 and the substrate 11 are connected in a sealing fashion, such that the first chamber 6 is communicated with the outside of the housing 1 only via the first through hole 4, and gas in the first chamber 6 may not leak at other positions.

The package structure for the differential pressure sensor further includes a pressure sensing element 2, fixed to the surface of the substrate 11 and disposed in the first chamber 6.

The pressure sensing element 2 is an MEMS device, and is provided with a second chamber 10 and a pressure sensing layer 201. The pressure sensing layer is disposed between the first chamber 6 and the second chamber 10.

Referring to FIG. 2, a schematic structural diagram of the pressure sensing element 2 of the electronic device according to this embodiment is illustrated.

The pressure sensing element 2 includes the pressure sensing layer 201 and a support structure 202 configured to support an edge of the pressure sensing layer 201. The second chamber 10 is disposed between the pressure sensing layer 201 and the support structure 202.

The pressure sensing layer 201 of the pressure sensing element 2 may include a pressure-sensitive thin film. The pressure-sensitive thin film may be a semiconductor film layer provided with a plurality of pressure-sensitive resistors 203. The plurality of pressure-sensitive resistors 203 constitute a Wheatstone bridge.

The pressure sensing layer 201 is deformed under a pressure, and resistances of the pressure-sensitive resistors 203 vary, such that an output signal of the Wheatstone bridge varies.

In FIG. 1 and FIG. 2, the pressure sensing element 2 is schematically illustrated, the illustration in the drawings does not represent the actual structure of the pressure sensing element 2.

In other embodiments, the pressure sensing element 2 may be any type of a pressure sensing element provided with a chamber, which, for example, detects a pressure based on capacitance variations.

The substrate 11 is provided with a second through hole 9. The second through hole 9 is communicated with the second chamber 10, and the second chamber is communicated with the outside via the second through hole 9.

In this embodiment, in the substrate 11, only one second through hole 9 is communicated with the second chamber 10. However, in other embodiments, in the substrate 11, more than two second through holes are communicated with the second chamber 10.

In this embodiment, the first through hole 4 and the second through hole 9 are disposed on two opposite sides of the package structure for the differential pressure sensor.

In other embodiments, the positions of the first through hole 4, the second through hole 9, and the pressure sensing element 2 may be reasonably defined according to the actual detection needs.

In this embodiment, a surface of the first through hole 4 is covered with a water-repellent ventilative film 3, which is capable of preventing a corrosive substance from entering the first chamber 6.

In other embodiments, the water-repellent ventilative film may not be disposed.

The water-repellent ventilative film 3 may be made of a hydrophobic material, which may be specifically made of at least one of a PP spunbonded nonwoven fabric, and a PE polymer ventilative film.

In this embodiment, the water-repellent ventilative film 3 is covered on an outer surface of the housing 1. In other embodiments, a water-repellent ventilative film 3' may also be covered on an inner surface of the housing 1.

In this embodiment, the package structure for the differential pressure sensor further includes an application specific integrated circuit (ASIC) chip 5 in the first chamber 6. The ASIC chip 5 is fixed to a surface of the substrate 11 disposed in the first chamber 6. The ASIC chip 5 is connected to a detection signal output terminal of the pressure sensing element 2 and configured to calculate a differential pressure value based on a detection signal output by the pressure sensing element 2.

Since the pressure sensing layer of the pressure sensing element 2 is disposed between the first chamber 6 and the second chamber 10, gas pressures in the first chamber 6 and the second chamber 10 simultaneously act on the pressure sensing layer of the pressure sensing element 2, such that a pressure eventually suffered by the pressure sensing layer is a pressure difference between the first chamber 6 and the second chamber 10. In this way, the detection signal output by the pressure sensing element 2 corresponds to the pressure difference between the first chamber 6 and the second chamber 10, and then the detection signal output by the pressure sensing element 2 is calculated by using the ASIC chip 5, and thus a corresponding differential pressure value is acquired.

By one pressure sensing element 2, the differential pressure value between two through holes may be detected, and there is no need to dispose a plurality of pressure sensors at different through holes. Therefore, the differential pressure may be reduced such that the differential pressure sensor has a small size and a low cost.

The ASIC chip 5 has high reliability, and low power consumption in the calculation process, such that power consumption is greatly reduced, and standby time of the product is prolonged.

The ASIC chip 5 is connected to detection signal output terminal of the pressure sensing element 2 by gold-wire bonding or other bonding process, such that the differential pressure value is calculated based on the detection signal output by the pressure sensing element 2.

For protection of ASIC chip 5 and the connection line between the ASIC chip 5 and the pressure sensing element 2, in this embodiment, the ASIC chip 5 is further covered with a protective layer 15.

The ASIC chip 5 is configured to output a feedback signal in response to the calculated differential pressure value reaching a threshold, such that output of an invalid signal is prevented, and power consumption is reduced.

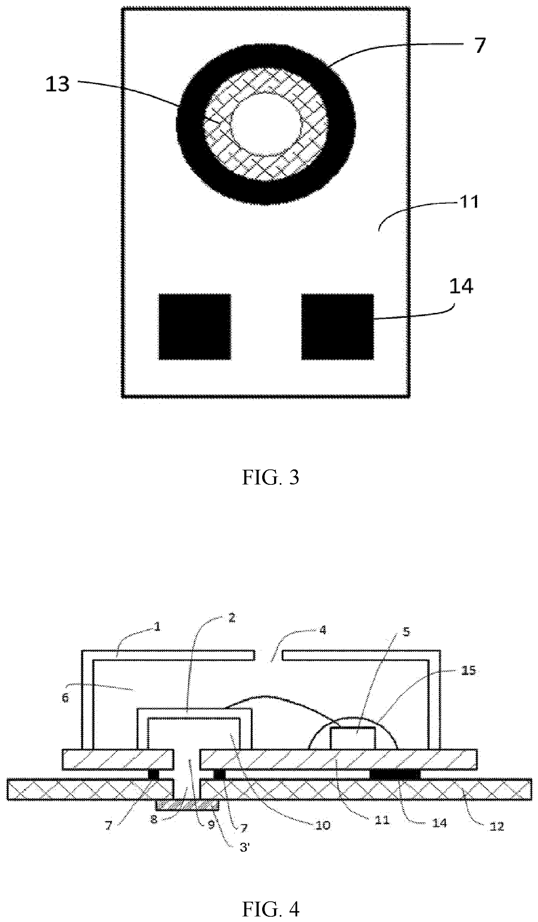

Referring to FIG. 3, a schematic diagram of a rear side of the substrate 11 of the package structure for the differential pressure sensor is illustrated.

The package structure for the differential pressure sensor further includes a sealed region 7and a solder pad 14 that are disposed on the rear side of the substrate 11.

The sealed region 7 is a closed pattern, according to the claimed invention a closed annular shape. A projection of the second through hole 9 in a plane of the sealed region 7 falls within the closed pattern.

According to the claimed invention, the sealed region 7 is circular.

In the case that the substrate 11 is connected to another circuit board, the sealed region 7 is configured to be fixedly connected to the circuit board.

In this embodiment, the sealed region 7 includes a conductive ring, such that the second through hole 9 is connected to a third through hole 8, and the conductive ring is capable of achieving an electrical connection between the substrate 11 and a first circuit board 12. Further, the sealed region 7 may also serve as the ground (GND) terminal in terms of practice of products.

The sealed region 7 may further include an insulative ring, for example, an epoxy resin, a rubber, or the like, which is capable of achieving a good sealing effect.

For improvement of a sealing effect when the sealed region 7 is connected to another circuit board, the sealed region 7 is protruded from the rear side of the substrate 11.

To ensure that the sealed region 7 is protruded from the rear side of the substrate 11, the edge, at least including a solder resist region 13 of the substrate 11 inside the sealed region 7, of the substrate 11 in the sealed region 7 may be polished, etched, or ground to remove a solder resist material on a surface of the solder resist region 13, such that the surface of the solder resist region 13 is obviously lower than the sealed region 7.

The solder resist material may be glass filaments or plastics or the like.

Still referring to FIG. 1, the electronic device further includes a first circuit board 12. The package structure for the differential pressure sensor is fixed to the first circuit board 12.

Specifically, the package structure for the differential pressure sensor is fixed to the first circuit board 12 via the substrate 11.

The first circuit board 12 is provided with a circuit, and thus achieves an electrical connection with the substrate 11.

The ASIC chip 5 is electrically connected to the first circuit board 12 via an electrical connection structure in the substrate 11 and the solder pad 14.

The first circuit board 12 is provided with a functional circuit. A signal output by the ASIC chip 5 serves as an input signal of the functional circuit on the first circuit board 12.

The functional circuit on the first circuit board 12 is capable of processing the signal output by the ASIC chip 5.

In other embodiments, the first circuit board 12 is further mounted with other electronic elements.

The first circuit board 12 is provided with a third through hole 8. The third through hole 8 is communicated with the second through hole 9 in a sealing fashion, and the second chamber 10 is communicated with the outside via the second through hole 9 and the third through hole 8.

The third through hole 8 is communicated with the second through hole 9 in a sealing fashion, such that external gas, while entering the second chamber 10 via the third through hole 8 and the second through hole 9, may not leak from a position between the first circuit board 12 and the substrate 11. In this way, accuracy of differential pressure detection is improved.

In this embodiment, the rear side of the substrate 11 is fixed to the first circuit board 12 via the sealed region 7 and the solder pad 14.

Projections of the second through hole 9 and the third through hole 8 in a plane where the sealed region 7 is located both fall within the closed pattern, and the sealed region 7 is disposed between the substrate 11 and the first circuit board 12, such that the third through hole 8 is communicated with the second through hole 9.

The number of solder pads 14 and the shape thereof are not limited by the illustration in FIG. 3, and may be reasonably designed according to the actual circuit structure.

In this embodiment, the sealed region 7 is a circular solder pad, and the sealed region 7 and the solder pad 14 are made to be electrically connected to the circuit on the first circuit board 12 by soldering, such that signals are transmitted therebetween.

To prevent liquid or gas from leaking between the first circuit board 12 and the substrate 11 while entering the second through hole 9 from the third through hole 8, the third through hole 8 is communicated with the second through hole 9 in a sealing fashion.

The solder resist region 13 is obviously lower than the sealed region 7, such that the sealed region 7 easily tightly bonds the substrate 11 to the first circuit board 12 via a sealing material, such that air tightness of the product is ensured.

In other specific embodiments, the sealed region 7 may also be connected to the first circuit board 12 by adhesive bonding. In this case, an adhesive layer or the like sealing material (not illustrated in the drawings) is present between the sealed region 7 and the first circuit board 12, such that the sealed region 7 and the first circuit board 12 are connected to each other in a sealing fashion.

In addition to sealed connection formed between the sealing region 7 and the first circuit board 12 by the solder material, the adhesive or the like material, in other embodiments, the solder material, the adhesive or the like material may also be further filled at an edge of a joint between the sealed region 7 and the first circuit board 12, to improve sealing performance between the sealed region 7 and the first circuit board 12.

In other embodiments, the sealed region 7 may also be disposed inside the surface of the substrate 11, and may be at least partially lower than the rear side of the substrate 11 or flush with the rear side of the substrate 11. Sealing connection between the sealed region 7 and the first circuit board 12 is practiced by filling a sealing material between the sealed region 7 and the first circuit board 12 and/or filling the sealing material at edges of the sealed region 7 and the first circuit board 12.

### Second embodiment

Referring to FIG. 4, a schematic structural diagram of an electronic device according to another embodiment of the present disclosure is illustrated.

In this specific embodiment, the third through hole 8 in the first circuit board 12 is covered with a water-repellent ventilative film 3'.

The water-repellent ventilative film 3' is covered on an outer side surface of the first circuit board 12 facing away from the differential pressure sensor. In other embodiments, the water-repellent ventilative film 3' may also be covered on an inner side surface of the first circuit board 12.

Generally, a water-repellent ventilation film may be covered on the surface of the through hole on the side where an air flow is applied.

In other embodiments, a water-repellent ventilation film may be covered on each of the surfaces of the first through hole 4 and the third through hole 8 on two opposite sides of the differential pressure sensor.

In the above embodiment, the package structure for the differential pressure sensor may be horizontally placed to detect gas pressure variations above or under the differential pressure sensor.

### Third embodiment

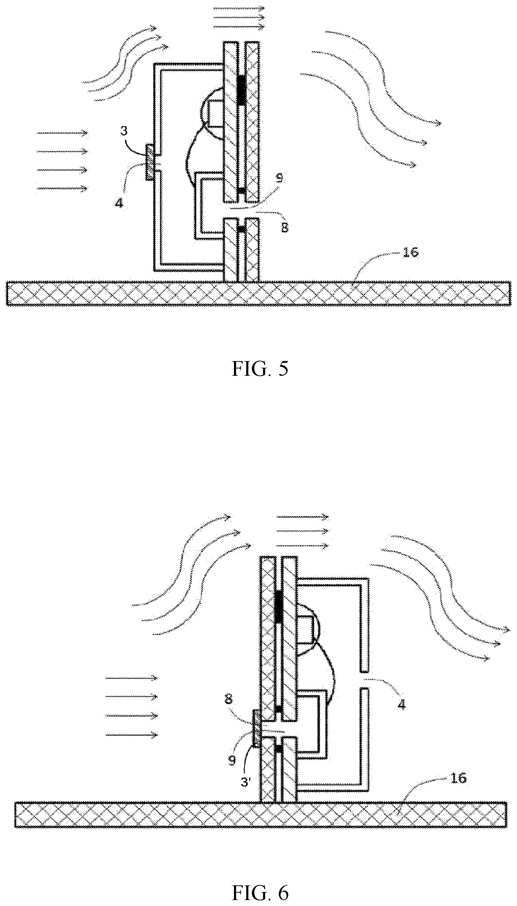

Referring to FIG. 5, a schematic structural diagram of an electronic device according to another embodiment of the present disclosure is illustrated.

In this embodiment, the electronic device detects the gas pressure variation on two sides of the package structure for the differential pressure sensor in the horizontal direction.

Specifically, in this embodiment, the electronic device further includes a second circuit board 16. The substrate 11 and the first circuit board 12 are perpendicularly fixed to the second circuit board 16, such that the first through hole 4 and the third through hole 8 respectively face two opposite sides in the horizontal plane.

The first circuit board 12 and the second circuit board 16 may be electrically connected to each other via a conductive wire.

The first through hole 4 covered with the water-repellent ventilative film 3 is made to face the direction of the air flow. The air flow enters from the first through hole 4, part of the air flow passes through the water-repellent ventilative film 3 and enters the first chamber 6, and the remaining air flow changes the flowing direction along the differential pressure sensor and bypasses the differential pressure sensor and flows to the rear side of the differential pressure sensor. In this case, gas pressures inside the first through hole 4 and the third through hole 8 vary. Therefore, the pressure sensing element outputs a pressure variation signal to the ASIC chip, such that the ASIC chip calculates the differential pressure value.

### Fourth embodiment

Referring to FIG. 6, a schematic diagram of a package structure for a differential pressure sensor that is perpendicularly used according to another embodiment of the present disclosure is illustrated.

In this embodiment, the water-repellent ventilative film 3' is covered on the third through hole 8. Therefore, the third through hole 8 is made to face the direction of the air flow.

### Fifth embodiment

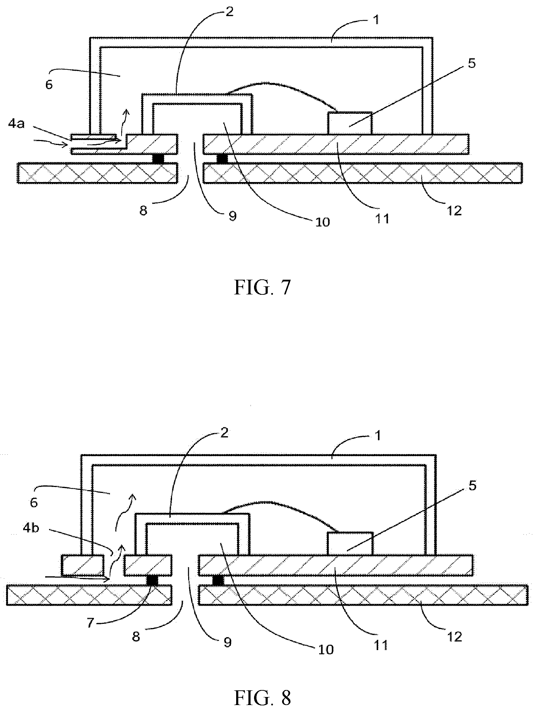

Referring to FIG. 7, in this embodiment, the first chamber 6 of the package structure for the differential pressure sensor is communicated with the outside via the first through hole 4a.

The first through hole 4a runs through the substrate 11 and is communicated with the first chamber 6.

In this embodiment, a gas or liquid inlet direction of the first through hole 4a is parallel to the surface of the substrate 11, and a gas or liquid outlet direction of the first through hole 41 is perpendicular to the surface of the substrate 11.

During use of the electronic device, the first through hole 4a and the third through hole 8 are respectively communicated with different external environments, such that the electronic device is capable of detecting differential pressures under different external environment.

### Sixth embodiment

Referring to FIG. 8, in this embodiment, the first chamber 6 between the housing 1 and the substrate 11 of the package structure for the differential pressure sensor is communicated with the outside via the first through hole 4b.
The first through hole 4b runs through the substrate 11 and is communicated with the first chamber 6.

In this embodiment, the first through hole 4b perpendicularly runs through the substrate 11, and is disposed outside the sealed region 7.

The external gas or liquid flows through a gap between the substrate 11 and the circuit board 12, and enters the first chamber 6 via the first through hole 4b.

During use of the electronic device, the first through hole 4b and the third through hole 8 are respectively communicated with different external environments, such that the electronic device is capable of detecting differential pressures under different external environment.

In other embodiments, the position of the first through hole may be reasonably designed according to factors such as different external environments and positions of the differential pressure to be detected.

### Seventh Embodiment

In this embodiment, the electronic device further includes a processor, i.e., a central processing unit (CPU).

The processor is connected to the signal output terminal of the ASIC chip of the differential pressure sensor, and configured to acquire an output signal of the ASIC chip, and triggers a corresponding instruction based on the output signal.

The processor (CPU) may be mounted on the first circuit board 12 (referring to FIG. 1) or the second circuit board 16, and connected to the signal output terminal of the ASIC chip via the functional circuit on the first circuit board 12 and/or the second circuit board 16.

In other specific embodiments, the processor may be also mounted on other circuit boards, for example, a control board, and connected to the first circuit board 12 or the second circuit board 16 via an inter-board connection line, such that a signal connection between the processor and the signal output terminal of the ASIC chip is practiced, and signal transmission between the processor and the ASIC chip is implemented.

The ASIC chip is configured to send the feedback signal to the processor in response to a differential pressure value detected by the pressure sensing element reaching a threshold.

The processor is configured to be in a standby state with no need of processing instructions related to the differential pressure value in response to the differential pressure value not reaching the threshold.

In the case that the electronic device is in the standby state, the differential pressure sensor automatically detects variations of pressure values at regular intervals.

The pressure sensing element of the differential pressure sensor transmits the detection signal indicative of a has pressure variation to the ASIC chip. The ASIC chip calculates the differential pressure value, and sends a feedback signal to the process in response to the gas pressure variation reaching a predetermined threshold. In response to the feedback signal, the processor triggers the related instruction.

Prior to the differential pressure value reaching the predetermined threshold, the processor may be in the standby state, and power consumption is reduced.

Since power consumption of the ASIC chip is far less than that of the processor, the solution of calculating the differential pressure value and then feeding back a valid differential pressure value to the processor by the ASIC chip reduces power consumption of the electronic device and prolongs standby time of the electronic device.

In addition, the electronic device has a simple structure, and is suitable for mass production.

## Claims

1. A package structure for a differential pressure sensor of an electronic device, comprising:
a substrate (11) and a housing (1), wherein an edge of the housing (1) is fixed to a front side of the substrate (11) and defines a first chamber (6) with the substrate(11); and
a pressure sensing element (2) fixed to the front side of the substrate (11) and disposed in the first chamber (6), wherein the pressure sensing element (2) is provided with a second chamber (10) and a pressure sensing layer (201), the pressure sensing layer (201) being disposed between the first chamber (6) and the second chamber (10);
wherein the first chamber (6) is communicated with the outside via a first through hole (4), and the second chamber (10) is communicated with the outside via a second through hole (9);
**characterized in that** a rear side of the substrate (11) is provided with a sealed region (7), the sealed region (7) being a closed pattern, and a projection of the second through hole (9) in a plane of the sealed region (7) falls within the closed pattern, wherein the sealed region (7) comprises a conductive ring.

2. The package structure according to claim 1, wherein the first through hole (4) runs through the housing (1), and the second through hole runs (9) through the substrate (11).

3. The package structure according to claim 1, wherein the first through hole (4) and the second through hole (9) both run through the substrate (11).

4. The package structure according to claim 1, wherein the first through hole (4) and the second through hole (9) are disposed on two opposite sides or the same side of the package structure for the differential pressure sensor.

5. The package structure according to claim 1, wherein the package structure further comprises an application specific integrated circuit (ASIC) chip (5) fixed to the front side of the substrate (11) disposed in the first chamber (6) and a processor, connected to a signal output terminal of the ASIC chip (5); wherein the ASIC chip (5) is connected to a detection signal output terminal of the pressure sensing element (2).

6. The package structure according to claim 5, wherein a surface of the ASIC chip (5) is covered with a protective layer (15).

7. The package structure according to claim 5, wherein the ASIC chip (5) is configured to output a feedback signal in response to the calculated differential pressure value reaching a threshold.

8. The package structure according to claim 1, wherein the sealed region (7) protrudes from the rear side of the substrate (11) or is flush with the rear side of the substrate (11).

9. An electronic device, comprising:
the package structure for the differential pressure sensor as defined in any one of claims 1 to 8; and
a first circuit board (12), wherein the first circuit board (12) is provided with a third through hole (8), the third through hole (8) being communicated with the second through hole (9).

10. The electronic device according to claim 9, the sealed region is disposed between the substrate (11) and the first circuit board (12) and fixed to the first circuit board (12) by soldering or adhesive bonding, such that the third through hole (8) is communicated with the second through hole (9) in a sealing fashion.

11. The electronic device according to claim 9, further comprising: a water-repellent ventilative film (3) configured to cover the first through hole (4) and/or the third through hole (8).

12. The electronic device according to claim 9, further comprising: a second circuit board (16), wherein the substrate (11) and the first circuit board (12) are perpendicularly fixed to the second circuit board (16), and the first circuit board (12) and the second circuit board (16) are electrically connected.

13. The electronic device according to claim 9, wherein in the case that the package structure is provided with an application specific integrated circuit (ASIC) chip (5), the ASIC chip is connected to the first circuit board by an electrical connection structure in the substrate.

14. The electronic device according to claim 13, further comprising: a processor, connected to a signal output terminal of the ASIC chip (5), and configured to acquire a feedback signal output by the ASIC chip (5).

15. The electronic device according to claim 14, wherein the ASIC chip (5) is configured to send the feedback signal to the processor in response to a differential pressure value detected by the pressure sensing element reaching a threshold.

16. The electronic device according to claim 15, wherein the processor is configured to be in a standby state in response to the differential pressure value not reaching the threshold.

## Patentansprüche

1. Gehäusestruktur für einen Differenzdrucksensor einer elektronischen Vorrichtung, umfassend:
ein Substrat (11) und ein Gehäuse (1), wobei ein Rand des Gehäuses (1) an einer Vorderseite des Substrats (11) befestigt ist und zusammen mit dem Substrat (11) eine erste Kammer (6) definiert; und
ein Druckerfassungselement (2), welches an der Vorderseite des Substrats (11) befestigt und in der ersten Kammer (6) angeordnet ist, wobei das Druckerfassungselement (2) eine zweite Kammer (10) und eine Druckerfassungsschicht (201) aufweist, wobei die Druckerfassungsschicht (201) zwischen der ersten Kammer (6) und der zweiten Kammer (10) angeordnet ist;
wobei die erste Kammer (6) kommuniziert über ein erstes Durchgangsloch (4) mit dem Außenraum und die zweite Kammer (10) kommuniziert über ein zweites Durchgangsloch (9) mit dem Außenraum.
**dadurch gekennzeichnet, dass**
die Rückseite des Substrats (11) mit einem Dichtungsbereich (7) versehen ist, der Dichtungsbereich (7) ein geschlossenes Muster ist und eine Projektion des zweiten Durchgangslochs (9) in einer Ebene des Dichtungsbereichs (7) innerhalb des geschlossenen Musters liegt, wobei der Dichtungsbereich (7) einen leitfähigen Ring umfasst.

2. Gehäusestruktur nach Anspruch 1, wobei das erste Durchgangsloch (4) durch das Gehäuse (1) hindurch verläuft, und das zweite Durchgangsloch (9) durch das Substrat (11) hindurch verläuft.

3. Gehäusestruktur nach Anspruch 1, wobei das erste Durchgangsloch (4) und das zweite Durchgangsloch (9) beide durch das Substrat (11) hindurch verlaufen.

4. Gehäusestruktur nach Anspruch 1, wobei das erste Durchgangsloch (4) und das zweite Durchgangsloch (9) an zwei gegenüberliegenden Seiten oder an derselben Seite der Gehäusestruktur für den Differenzdrucksensor angeordnet sind.

5. Gehäusestruktur nach Anspruch 1, wobei die Gehäusestruktur ferner einen an der Vorderseite des in der Kammer angeordneten Substrats befestigten ASIC (Application Specific Integrated Circuit)-Chip (5) und einen Prozessor umfasst, welcher mit einem Signalausgangsanschluss des ASIC-Chips (5) verbunden ist, und wobei der ASIC-Chip (5) mit einem Detektionssignalausgangsanschluss des Druckerfassungselements (2) verbunden ist.

6. Gehäusestruktur nach Anspruch 5, wobei eine Oberfläche des ASIC-Chips (5) mit einer Schutzschicht (15) überzogen ist.

7. Gehäusestruktur nach Anspruch 5, wobei der ASIC-Chip (5) konfiguriert ist, ein Rückmeldesignal auszugeben, wenn der berechnete Differenzdruckwert einen Schwellenwert erreicht.

8. Gehäusestruktur nach Anspruch 1, wobei der Dichtungsbereich (7) aus der Rückseite des Substrats (11) hervorsteht oder mit der Rückseite des Substrats (11) bündig ist.

9. Elektronische Vorrichtung, umfassend
die Gehäusestruktur für den Differenzdrucksensor nach einem der Ansprüche 1 bis 8 und
eine erste Leiterplatte (12), wobei die erste Leiterplatte (12) ein drittes Durchgangsloch (8) aufweist, wobei das dritte Durchgangsloch (8) mit dem zweiten Durchgangsloch (9) in Kommunikation steht.

10. Elektronische Vorrichtung nach Anspruch 9, wobei der Dichtungsbereich zwischen dem Substrat (11) und der ersten Leiterplatte (12) angeordnet ist und durch Löten oder durch eine Klebeverbindung an der ersten Leiterplatte (12) befestigt ist, sodass das dritte Durchgangsloch (8) mit dem zweiten Durchgangsloch (9) in abdichtender Weise in Kommunikation steht

11. Elektronische Vorrichtung nach Anspruch 9, ferner umfassend: einen wasserabweisenden Belüftungsfilm (3), ausgebildet, um das erste Durchgangsloch (4) und/oder das dritte Durchgangsloch (8) abzu decken.

12. Elektronische Vorrichtung nach Anspruch 9, ferner umfassend: eine zweite Leiterplatte (16), wobei das Substrat (11) und die erste Leiterplatte (12) senkrecht an der zweiten Leiterplatte (16) befestigt sind und die erste Leiterplatte (12) und die zweite Leiterplatte (16) elektrisch miteinander verbunden sind.

13. Elektronische Vorrichtung nach Anspruch 9, wobei, falls die Gehäusestruktur mit einem ASIC (Application Specific Integrated Circiut)-Chip (5) versehen ist, der ASIC-Chip mit der ersten Leiterplatte über eine elektrische Verbindungsstruktur im Substrat verbunden ist.

14. Elektronische Vorrichtung nach Anspruch 13, ferner umfassend: einen Prozessor, verbunden mit einem Signalausgangsanschluss des ASIC-Chips (5) und ausgebildet, um ein von dem ASIC-Chip (5) ausgegebenes Rückmeldesignal zu erfassen.

15. Elektronische Vorrichtung nach Anspruch 14, wobei der ASIC-Chip (5) ausgebildet ist, das Rückmeldesignal an den Prozessor zu senden, wenn ein von dem Druckerfassungselement detektierter Differenzdruckwert einen Schwellenwert erreicht.

16. Elektronische Vorrichtung nach Anspruch 15, wobei der Prozessor ausgebildet ist, sich in einem Standby-Zustand zu befinden, wenn der Differenzdruckwert den Schwellenwert nicht erreicht.

## Revendications

1. Structure d'encapsulation pour un capteur de pression différentielle d'un dispositif électronique, comprenant :
un substrat (11) et un boîtier (1), un bord du boîtier (1) étant fixé à une face avant du substrat (11) et délimitant avec le substrat (11) une première chambre (6) ; et
un élément de détection de pression (2), fixé à la face avant du substrat (11) et disposé dans la première chambre (6), l'élément de détection de pression (2) étant pourvu d'une seconde chambre (10) et d'une couche de détection de pression (201), la couche de détection de pression (201) étant disposée entre la première chambre (6) et la seconde chambre (10) ;
dans lequel la première chambre (6) est en communication avec l'extérieur via un premier trou traversant (4), et la seconde chambre (10) est en communication avec l'extérieur via un second trou traversant (9) ;
**caractérisée en ce qu'**une face arrière du substrat (11) est pourvue d'une région d'étanchéité (7), la région d'étanchéité (7) étant un motif fermé, une projection du second trou traversant (9) dans un plan de la région d'étanchéité (7) étant située à l'intérieur du motif fermé, la région d'étanchéité (7) comprenant un anneau conducteur.

2. Structure d'encapsulation selon la revendication 1, dans laquelle le premier trou traversant (4) traverse le boîtier (1), et le second trou traversant (9) traverse le substrat (11).

3. Structure d'encapsulation selon la revendication 1, dans laquelle le premier trou traversant (4) et le second trou traversant (9) traversent tous deux le substrat (11).

4. Structure d'encapsulation selon la revendication 1, dans laquelle le premier trou traversant (4) et le second trou traversant (9) sont disposés sur deux côtés opposés ou sur le même côté de la structure d'encapsulation pour le capteur de pression différentielle.

5. Structure d'encapsulation selon la revendication 1, dans laquelle la structure d'encapsulation comprend en outre une puce de circuit intégré spécifique à une application (ASIC) (5) fixée à la face avant du substrat (11) et disposée dans la première chambre (6), ainsi qu'un processeur connecté à une borne de sortie de signal de la puce ASIC (5) ; et dans laquelle la puce ASIC (5) est connectée à une borne de sortie de signal de détection de l'élément de détection de pression (2).

6. Structure d'encapsulation selon la revendication 5, dans laquelle une surface de la puce ASIC (5) est recouverte d'une couche de protection (15).

7. Structure d'encapsulation selon la revendication 5, dans laquelle la puce ASIC (5) est configurée pour émettre un signal de rétroaction en réponse à l'atteinte d'un seuil par la valeur de pression différentielle calculée.

8. Structure d'encapsulation selon la revendication 1, dans laquelle la région d'étanchéité (7) fait saillie depuis la face arrière du substrat (11) ou affleure la face arrière du substrat (11).

9. Dispositif électronique, comprenant :
la structure d'encapsulation pour le capteur de pression différentielle selon l'une quelconque des revendications 1 à 8 ; et
une première carte de circuit (12), la première carte de circuit (12) étant pourvue d'un troisième trou traversant (8), le troisième trou traversant (8) étant mis en communication avec le second trou traversant (9).

10. Dispositif électronique selon la revendication 9, la région d'étanchéité est disposée entre le substrat (11) et la première carte de circuit (12) et fixée à la première carte de circuit (12) par soudage ou collage adhésif, de telle sorte que le troisième trou traversant (8) est mis en communication avec le second trou traversant (9) de manière étanche.

11. Dispositif électronique selon la revendication 9, comprenant en outre un film ventilant hydrofuge (3) configuré pour recouvrir le premier trou traversant (4) et/ou le troisième trou traversant (8).

12. Dispositif électronique selon la revendication 9, comprenant en outre une seconde carte de circuit (16), dans laquelle le substrat (11) et la première carte de circuit (12) sont fixés perpendiculairement à la seconde carte de circuit (16), et la première carte de circuit (12) et la seconde carte de circuit (16) sont électriquement connectées.

13. Dispositif électronique selon la revendication 9, dans lequel dans le cas où la structure d'encapsulation est pourvue d'une puce de circuit intégré spécifique à une application (ASIC) (5), la puce ASIC est connectée à la première carte de circuit par une structure de connexion électrique dans le substrat.

14. Dispositif électronique selon la revendication 13, comprenant en outre un processeur, connecté à une borne de sortie de signal de la puce ASIC (5), et configuré pour acquérir un signal de rétroaction émis par la puce ASIC (5).

15. Dispositif électronique selon la revendication 14, dans lequel la puce ASIC (5) est configurée pour envoyer le signal de rétroaction au processeur en réponse à l'atteinte d'un seuil par une valeur de pression différentielle détectée par l'élément de détection de pression.

16. Dispositif électronique selon la revendication 15, dans lequel le processeur est configuré pour être dans un état de veille en réponse à la non-atteinte du seuil par la valeur de pression différentielle.
